# FASCICULE DE BREVET EUROPEEN

(11) **EP 2 537 751 B1**
(45) Date de publication et mention de la délivrance du brevet: **14.05.2014**
(21) Numéro de dépôt: 12185355.0
(22) Date de dépôt: 17.12.2010
(51) Int. Cl.: B64C 25/40

(54) **SYSTÈME DE MOTORISATION D'UNE ROUE ASSOCIÉE À UNE SUSPENSION**
RADMOTORISIERUNGSSYSTEM FÜR EINE RADAUFHÄNGUNG
WHEEL MOTORISING SYSTEM FOR A WHEEL SUSPENSION

(30) Priorité: 17.12.2009 FR 0959143
(43) Date de publication de la demande: 26.12.2012
(62) Demande divisionnaire de: 10807608.4
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: Essinger, Olivier, 1814 La Tour de Peilz (CH); Stacchi, Cesare, 6648 Minusio (CH)
(74) Mandataire: Lasson, Cédric Y. M.

(56) Documents cités:
- DE-A1-102008 006 295
- US-A- 2 320 547
- US-A- 3 762 670
- US-A- 3 764 094
- US-A- 3 977 631

## Description

La présente invention concerne un système de motorisation d'une roue associée à une suspension pour la circulation au sol d'aéronef.

Lorsque l'on parle de motoriser la circulation des aéronef au sol, il s'agit de motoriser le déplacement des aéronefs de manière autonome mais à des vitesses réduites comme c'est le cas pour un avion avant son décollage ou après son atterrissage sur les aéroports, il s'agit de ce quon appelle couramment le « taxiing » Il ne s'agit donc pas ici de motoriser la roue de manière à lui donner une vitesse en rapport avec la vitesse d'atterrissage comme on l'a déjà proposé dans l'état de la technique.

On connaît un système de motorisation d'une roue associée à une suspension, du type comprenant un bloc moteur et un organe d'entraînement solidaire de la roue.

Cependant, un tel système présente une certaine sensibilité aux chocs, d'autant plus importante et préjudiciable que la vitesse de déplacement sur le sol du véhicule portant le système de motorisation est élevée et que ce sol est irrégulier.

On connaît un autre système de motorisation d'une roue associée à une suspension, du type comprenant un bloc moteur porté par la partie suspendue de la jambe de suspension et un organe d'entraînement solidaire de la roue.

Un tel système présente souvent l'inconvénient que le bloc moteur reste logé dans la partie couverte par le ventre de l'avion, sans possibilité d'être refroidi par l'air ambiant. De plus, la transmission mécanique jusqu'à la roue est souvent réalisée sous forme d'engrenages qui effectuent plusieurs renvois d'angle des arbres associés, ce qui est préjudiciable pour le rendement de la transmission et nécessite une précision accrue des points de fixation afin de garantir un bon engrènement des engrenages.

Le document US3764094 décrit un système de motorisation selon le préambule de la revendication 1 dans lequel une turbine auxilière entraine par l'intermédiaire d'un couplage par crabot un arbre de transmission en prise constante avec une couronne dentée solidaire de la roue.

Le document US3762670 décrit un système de motorisation agissant par friction sur le pneumatique de l'aéronef. Un inconvénient de ce système est sa force transmissible limitée par le coefficient de frottement de la bande de roulement.

Les documents US3977631 et DE102008006295 décrivent des systèmes de motorisation solidaires de la partie suspendue de la jambe de suspension.

La présente invention vise à réaliser un système de motorisation présentant une sensibilité aux chocs nettement moins importante, sans imposer de contrainte supplémentaire de refroidissement dans l'aéronef et qui vise un meilleur rendement de la transmission mécanique.

Selon l'invention, dans le système de motorisation du type précité, le bloc moteur est solidaire d'une partie suspendue d'une jambe de suspension, le système de motorisation comprenant en outre un dispositif d'embrayage reliant un arbre de sortie du bloc moteur à l'organe d'entraînement, la transmission entre le bloc moteur et l'organe d'entraînement étant une transmission positive.

Ainsi, la masse du système de motorisation qui n'est pas suspendue est minimale et limitée à l'organe d'entraînement qui est solidaire de la roue. En revanche, le bloc moteur se trouve donc suspendu. Dans le cas où le véhicule concerné est un avion, cette répartition du système de motorisation entre la partie suspendue et la partie non suspendue permet au système de motorisation d'avoir moins de choc à l'atterrissage. De plus, comme seul l'organe d'entraînement est solidaire de la roue, la masse ajoutée à la partie non suspendue est minimisée, ce qui permet de limiter le surdimensionnement du train d'atterrissage.

Selon l'invention, le bloc moteur comprend un moteur électrique et un système de réduction reliant l'arbre de sortie du moteur à l'organe d'entraînement.

Selon l'invention, un système d'adaptation de vitesse commandé électroniquement est associé au dispositif d'embrayage. Ce système comprend un capteur permettant de mesurer la vitesse de la roue et des moyens permettant de commander la vitesse de rotation correspondante du moteur.

Selon une variante, le système de réduction est solidaire du moteur.

Selon une variante, le dispositif d'embrayage est conformé de façon à pouvoir déplacer le bloc moteur dans une position embrayée dans laquelle ce bloc est relié à l'organe d'entraînement, et une position débrayée dans laquelle ce bloc en est séparé.

Selon une variante, le dispositif d'embrayage est conformé de façon à permettre le débrayage automatique du bloc moteur en cas de dépassement d'un niveau donné d'effort transmis entre la roue et au moins un moteur faisant partie du bloc moteur.

Selon une variante, le dispositif d'embrayage est conformé de sorte que le bloc moteur est monté en rotation par rapport à la partie suspendue de la jambe de suspension, selon un axe horizontal.

Selon une variante, le dispositif d'embrayage comprend deux bielles définissant l'axe instantané de rotation du bloc moteur.

Selon une variante, le dispositif d'embrayage comprend un système de déplacement adapté à déplacer le bloc moteur de l'une à l'autre de ses deux positions embrayée et débrayée.

Selon une variante, le système de déplacement comprend un élément moteur.

Selon une variante, l'élément moteur est formé par un vérin.

Selon une variante, le vérin est un vérin électrique qui comprend un moteur d'entraînement qui est disposé dans le cylindre, un écrou qui est monté en translation, et une vis qui permet de transformer le mouvement de rotation du moteur d'entraînement en mouvement de translation de l'écrou.

Selon une variante, le système de déplacement comprend un élément de rappel adapté à déplacer le bloc moteur dans le sens opposé de celui imposé par l'élément moteur.

Selon une variante, l'élément de rappel est formé par un ressort de rappel.

Selon une variante, le vérin est adapté à déplacer du bloc moteur dans sa position engrenée, et le ressort de rappel est adapté à entraîner le bloc moteur dans sa position désengrenée.

Selon une variante, le système de déplacement est adapté à appliquer au bloc moteur une force supérieure à une valeur limite nécessaire pour que le bloc moteur reste en position embrayée.

Selon une variante, l'organe d'entraînement est une couronne dentée portée par la jante de la roue, et adaptée à recevoir en engrènement le pignon de sortie du bloc moteur quand ce dernier est dans sa position embrayée.

Selon une variante, la position engrenée du pignon de sortie est définie par la mise en butée sans glissement de deux lèvres de roulement portées par la couronne dentée sur deux pistes de roulement portées par le pignon de sortie.

Selon une variante, le pignon est porté par l'arbre de sortie du bloc moteur par l'intermédiaire d'un joint homocinétique.

L'invention concerne également un ensemble de deux systèmes de motorisation conformes au premier aspect de l'invention, cet ensemble étant adapté à être associé à une même jambe de suspension, les deux roues étant coaxiales et les deux blocs moteur étant solidaires l'un de l'autre.

Selon une variante, les deux blocs moteur de l'ensemble de deux systèmes de motorisation sont disposés entre les deux roues.

Selon une variante, les deux blocs moteur de l'ensemble de deux systèmes de motorisation sont disposés derrière la jambe de suspension.

Selon une variante, l'ensemble de deux systèmes de motorisation ne comprend qu'un seul dispositif d'embrayage commun aux deux systèmes qui permet de débrayer en même temps le bloc moteur de chaque roue.

Selon une variante, dans l'ensemble de deux systèmes de motorisation, les deux blocs moteur sont disposés en V, la pointe du V correspondant à l'axe commun des deux pignons de sortie des deux systèmes de réduction, et chaque extrémité supérieure correspondant à l'axe d'un moteur.

Un tel système de motorisation ou un tel ensemble de deux systèmes de motorisation, selon le cas, est avantageusement utilisé pour la motorisation d'un train d'atterrissage principal d'un avion.

D'autres particularités et avantages de la présente invention apparaîtront dans le mode de réalisation donné à titre d'exemple non limitatif et illustré par les dessins mis en annexe dans lesquels :
La figure 1 est une vue en perspective d'un train d'atterrissage d'avion équipé d'un ensemble de deux systèmes de motorisation de roue conformes à la présente invention, l'ensemble étant embrayé aux roues et la roue la plus proche étant représentée sans pneu ;
La figure 2 est une vue en coupe selon un plan perpendiculaire à l'axe des roues du train d'atterrissage de la figure 1, l'ensemble des deux systèmes étant en position embrayée ;
La figure 3 est une vue similaire à la figure 2, l'ensemble des deux systèmes étant en position débrayée ;
La figure 4 est une vue selon un plan perpendiculaire à l'axe des roues, du dispositif d'embrayage de l'ensemble des deux systèmes ;
La figure 5 est une vue en coupe du système de déplacement du dispositif d'embrayage ;
La figure 6 est une vue en coupe selon un plan perpendiculaire aux axes des arbres de rotation des deux blocs moteurs de l'ensemble des deux systèmes de motorisation ;
La figure 7 est une vue en coupe selon un plan passant par les trois axes de rotation d'un des deux systèmes de réduction ;
La figure 8 est une vue illustrant la coopération entre une roue et l'arbre de sortie du bloc moteur correspondant;

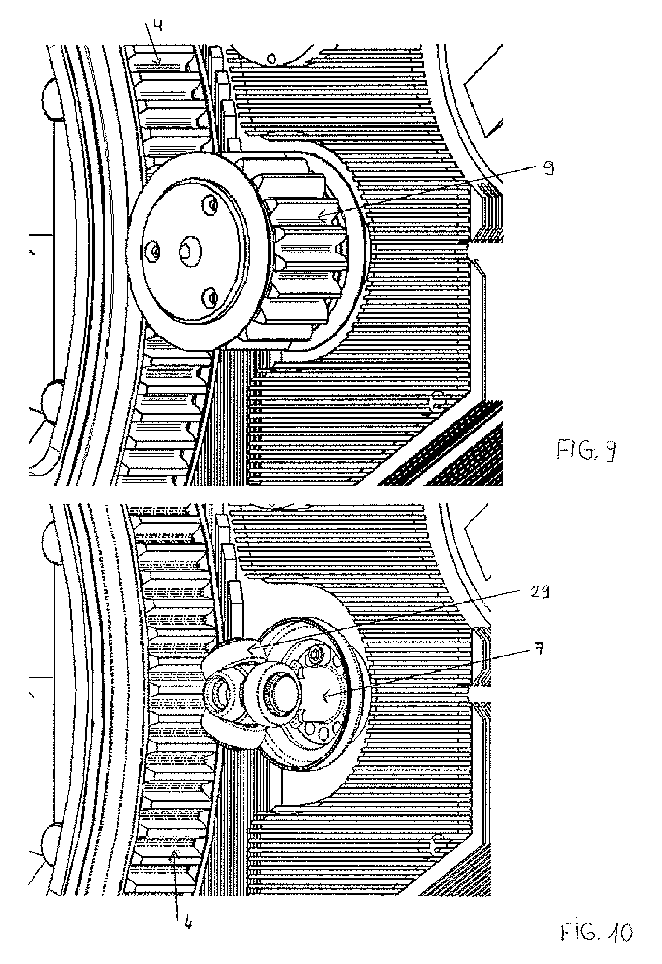

La figure 9 est une vue en perspective de la liaison roue / pignon de la figure 8 ; et
La figure 10 est une vue en perspective similaire à la figure 9 sans le pignon.

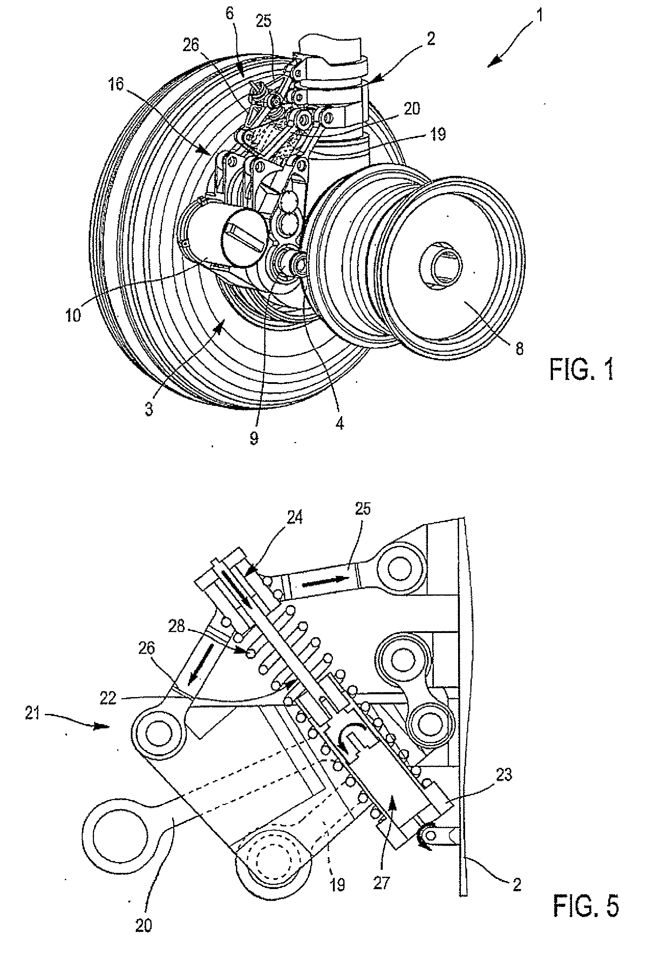

La figure 1 représente un train d'atterrissage principal 1 d'un avion, l'une des deux roues 5 de ce train étant représentée sans pneu pour des raisons de clarté. Outre les deux roues 5 qui sont coaxiales, et la jambe de suspension 2 portant ces deux roues 5, le train 1 comprend également un ensemble de deux systèmes de motorisation de roue, à savoir, un système par roue 5. Le fait d'avoir un système de motorisation pour chaque roue 5 supprime le besoin de rajouter un différentiel et permet d'adapter la vitesse des roues 5 pendant les virages. Cela permet aussi d'équilibrer en partie les efforts sur la suspension et sur le système de motorisation de la roue. De plus, cela répartit les efforts sur tous les pneumatiques donc cela homogénéise et limite leur usure.

Un système de motorisation conforme à la présente invention comprend un bloc moteur 3 qui est porté par la partie suspendue 2a de la jambe de suspension 2, un organe d'entraînement 4 qui est solidaire de la roue 5, et un dispositif d'embrayage 6 qui permet de relier à l'organe d'entraînement 4 un pignon 9 solidaire de l'arbre de sortie 7 du bloc moteur 3.
Comme illustré dans les différentes figures, dans le présent mode de réalisation, l'organe d'entraînement 4 solidaire de la roue 5 est formé par une couronne dentée 4 portée par la jante 8 de cette roue 5, cette couronne 4 recevant en engrènement le pignon de sortie 9 du bloc moteur 3 quand ce dernier est dans sa position embrayée. La couronne dentée 4 peut être rapportée à la jante ou usinée directement sur celle-ci. Ce type de transmission par pignons et roues dentées est qualifié de transmission « positive » par opposition aux systèmes de transmission par frottement comme les systèmes à galets. Une transmission positive n'est pas tributaire du coefficient de frottement et donc par exemple insensible aux intempéries ou à l'usure des éléments mis en oeuvre. On classe donc également les systèmes à courroies crantées parmi les transmissions positives, alors que les courroies lisses (plates ou en V) sont classées parmi les systèmes de transmission par frottement.

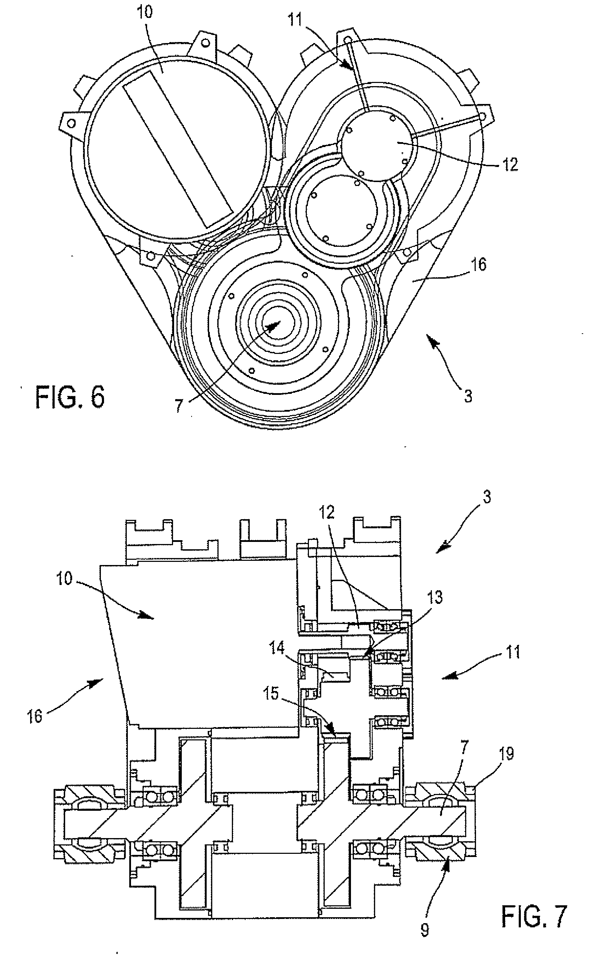

Par ailleurs, dans le présent mode de réalisation (cf. figure 7), le bloc moteur 3 comprend un moteur 10 (plus précisément, un moteur électrique qui, ici, est un moteur synchrone sans balai) et un système de réduction 11 qui permet de relier l'arbre de sortie du moteur 10 à l'organe d'entraînement 4. Ici, le système de réduction 11 est solidaire du moteur 10.

Comme illustré à la figure 7, le système de réduction 11 comprend deux étages disposés en cascade. Ici, chaque étage est formé par un train simple. En outre, le système de motorisation comprend un troisième étage de réduction formé par le pignon de sortie 9 du bloc moteur 3 (plus précisément, le pignon de sortie 9 du système de réduction 11) et la couronne dentée 4 portée par la roue 5.

De façon plus précise, le premier étage du système de réduction 11 est formé par l'engrènement d'un premier pignon moteur 12 porté par l'arbre de sortie du moteur 10 et d'une première roue dentée 13 (le rapport de réduction est ici de 3). Le second étage est formé par l'engrènement d'un second pignon 14 porté par la première roue dentée 13 et d'une seconde roue dentée 15 (le rapport de réduction est ici de 2,5). Le troisième étage (hors du bloc moteur) est formé par l'engrènement du pignon de sortie 9 du bloc moteur 3 porté par l'arbre de sortie 7 solidaire de la seconde roue dentée 15, et par la couronne dentée 4 portée par la roue 5 (le rapport de réduction est ici de 6,8).

Dans l'ensemble de deux systèmes de motorisation illustré à la figure 1, les deux blocs moteur 3 sont solidaires l'un de l'autre (ici, ils sont protégés de l'extérieur par un même carter 16). Pour des raisons de compacité, les deux blocs moteurs 3 sont disposés entre les deux roues 5. En outre, pour diminuer le risque de collision avec des objets externes (ou des oiseaux), surtout lors des phases de décollage et d'atterrissage, les deux blocs moteurs 3 sont disposés derrière la jambe de suspension 2.

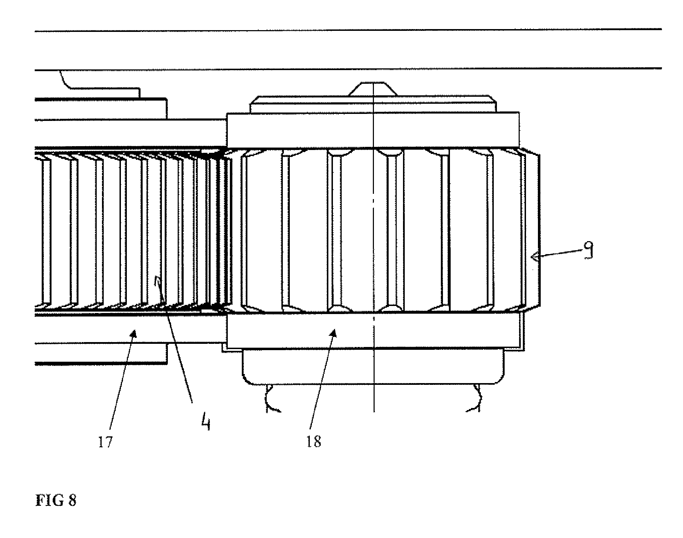

De plus, afin de définir la position d'engrènement du bloc moteur 3, la couronne dentée 4 porte deux lèvres de roulement 17 (cf. figure 8) qui sont adaptées à recevoir deux pistes de roulement 18 portées par le pignon de sortie 9 du bloc moteur 3. Le roulement s'effectue sans glissement et donc sans friction car les diamètres de roulement correspondent aux diamètres primitifs des engrenages.

Afin que l'ensemble des deux systèmes de motorisation suive le mouvement vertical de la roue par rapport à la position de l'absorbeur de chocs qui dépend de la charge de l'avion et de l'exécution ou non de virages, les deux blocs moteur 3 sont disposés de sorte que leurs arbres de sortie 7 sont coaxiaux.

Afin de pouvoir loger les deux blocs moteur 3 entre les deux roues 5, tout en satisfaisant l'exigence d'engrenage simultané, dans le présent mode de réalisation, outre l'utilisation de systèmes de réduction 11 à deux étages simples, les deux blocs moteur 3 sont disposés en V. De plus, cette disposition en V permet aux blocs moteur 3 de ne pas toucher le sol à l'atterrissage si un pneu éclate et de protéger le deuxième moteur des impacts (oiseaux, etc.). La pointe basse du V correspond à l'axe commun des deux arbres de sortie 7 des deux systèmes de réduction 11, chaque extrémité supérieure du V correspondant à l'axe d'un moteur 10. De plus, cette disposition en V des réducteurs est avantageuse pour la lubrification des engrenages. Pendant le fonctionnement, les engrenages font circuler l'huile (qui à repos se trouve dans le réservoir situé dans la pointe du V) jusqu'au premier étage ce qui permet une lubrification de tous les engrenages.

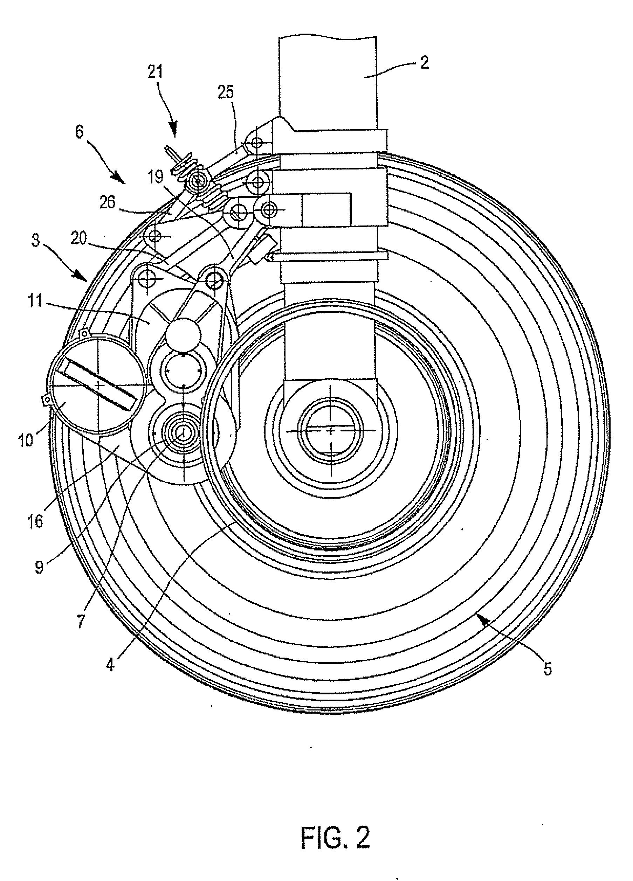

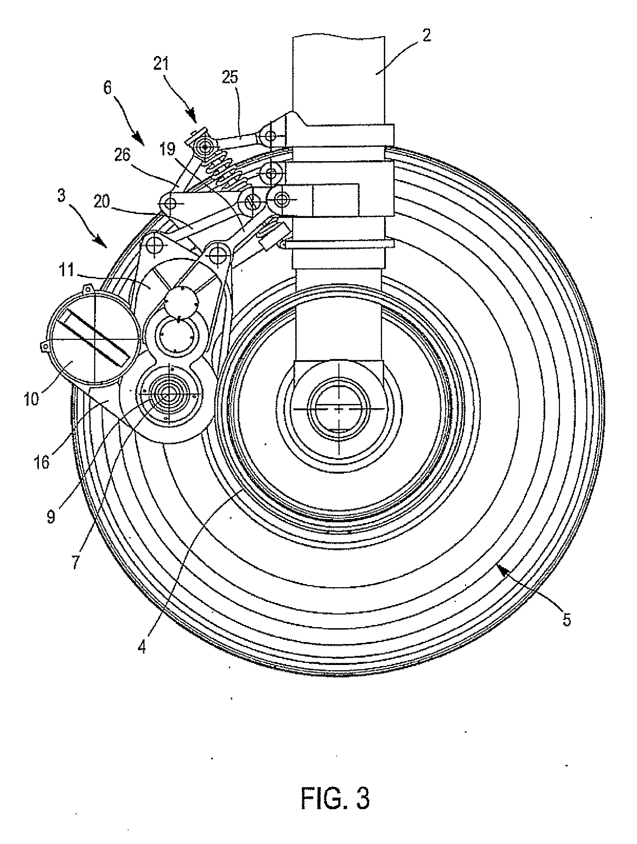

Par ailleurs, le dispositif d'embrayage 6 d'un système de motorisation est conformé de façon à pouvoir déplacer le bloc moteur 3 entre une position embrayée dans laquelle ce bloc 3 est relié à l'organe d'entraînement 4 (pignon de sortie 9 du système de réduction 11 engrené à la couronne dentée 4 de la roue 5, tel qu'illustré à la figure 2), et une position débrayée dans laquelle ce bloc 3 en est séparé (pignon 9 désengrené de la couronne dentée 4, tel qu'illustré à la figure 3). Dans le présent mode de réalisation, afin d'avoir une mise en engrenage simultanée des deux blocs moteur 3 avec les deux roues 5 et du fait de la solidarisation des deux blocs moteur 3, l'ensemble de deux systèmes de motorisation ne comprend qu'un seul dispositif d'embrayage 6. Cependant la synchronisation en vitesse entre le pignon 9 et la couronne dentée 4 est réalisée de manière séparée pour chaque couple roue 5 / bloc moteur 3.

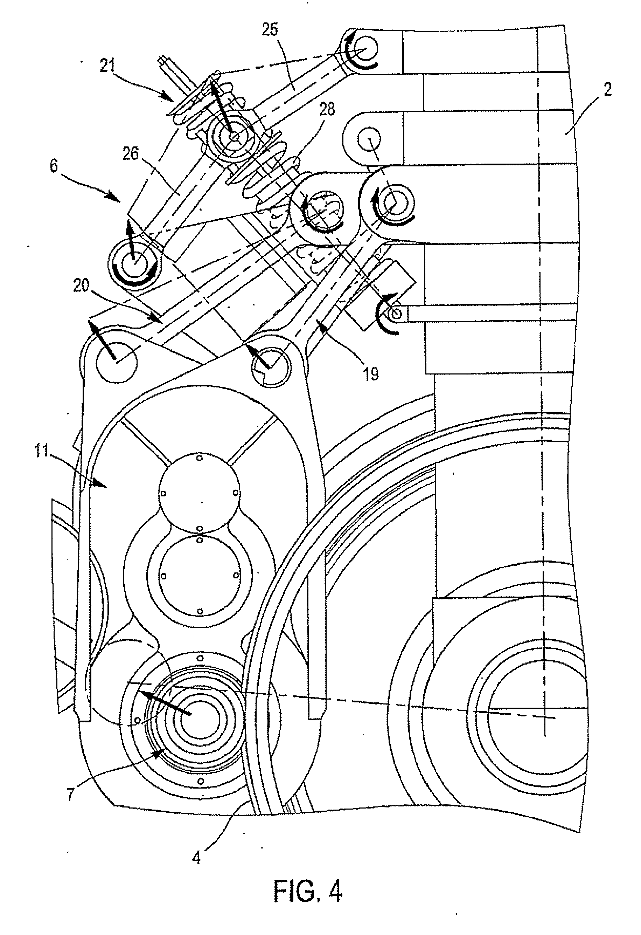

Dans le présent mode de réalisation, le dispositif d'embrayage 6 est conformé de sorte que le bloc moteur 3 est monté en rotation (par rapport à la partie suspendue de la jambe de suspension 2) selon un axe horizontal. Ainsi, l'embrayage correspond à un mouvement du bloc moteur 3 vers le bas et vers l'avant, et le débrayage à un mouvement vers le haut et vers l'arrière (mouvement illustré à la figure 4 par les différentes flèches).

De plus, dans une variante non représentée, pour permettre un certain degré de liberté de déplacement horizontal relatif des réducteurs en cas de déformation du train d'atterrissage, et ainsi assurer une force d'appui approximativement égale sur chaque roue, le bloc réducteur est monté sur le dispositif d'embrayage via un axe rotatif sensiblement vertical.

Au dispositif d'embrayage 6 est associé un système d'adaptation de vitesse commandé électroniquement. Ce système comprend un capteur permettant de mesurer la vitesse de la roue 5 et des moyens permettant de commander la vitesse de rotation correspondante du moteur 10.

Dans le présent mode de réalisation, comme illustré à la figure 4, le dispositif d'embrayage 6 comprend deux bielles 19, 20 concourantes dont l'intersection définit l'axe de rotation instantané du bloc moteur 3 (de façon plus précise, ici, il s'agit de deux paires de bielles). Chaque bielle 19, 20 est montée en rotation, par une de ses extrémités au bloc moteur 3, et par l'autre à la partie suspendue de la jambe de suspension 2.

Le dispositif d'embrayage 6 comprend également un système de déplacement 21 permettant de déplacer le bloc moteur 3 de l'une à l'autre de ses deux positions embrayée et débrayée. Comme illustré à la figure 5, le système de déplacement 21 comprend un vérin 22 relié au bloc moteur 3 et à la partie suspendue de la jambe de suspension 2. De façon plus précise, une extrémité du vérin (ici, le cylindre 23) est montée en rotation selon un axe horizontal sur la partie suspendue de la jambe de suspension 2. L'autre extrémité (la tige 24) est montée en rotation à deux bielles 25, 26 selon deux axes horizontaux, l'une 25 de ces bielles est également montée en rotation selon un axe horizontal sur la partie suspendue de la jambe de suspension 2, l'autre bielle 26 est quant à elle montée en rotation selon un axe horizontal sur le bloc moteur 3.

Ici, le vérin 22 est un vérin électrique. De façon plus précise, ce vérin 22 comprend un moteur d'entraînement 27 qui est disposé dans le cylindre 23, un écrou 24 auquel sont reliées les deux bielles 25, 26, et une vis (à billes ou à rouleaux satellites) qui permet de transformer le mouvement de rotation du moteur d'entraînement 27 en mouvement de translation de l'écrou 24. Cette vis à billes est montée sur la sortie d'un réducteur planétaire, lui-même monté sur le moteur d'entraînement 27.

Le dispositif d'embrayage 6 (plus précisément, le système de déplacement 21) permet d'appliquer une force suffisante sur le pignon de sortie 9 du bloc moteur 3 afin de le maintenir engrené avec la couronne dentée 4.

Dans le présent exemple, afin d'avoir un débrayage du bloc moteur 3 dès que l'alimentation électrique du moteur d'entraînement 27 du vérin 22 est coupée, le système de déplacement 21 comprend un ressort de rappel 28 qui, ici, enveloppe le vérin 22. Ainsi, le vérin 22 est utilisé pour entrainer le bloc moteur 3 dans sa position engrenée et le ressort 28 est utilisé pour l'entraîner dans sa position désengrenée. Le ressort 28 assure également qu'il n'y ait pas d'engrènement du pignon 9 sur la roue dentée 4 lors de l'atterrissage, tout en amortissant le choc lorsque l'avion touche le sol si l'on libère la rotation de la vis.

Le système de déplacement 21 est adapté à appliquer au bloc moteur 3 (au pignon 9) une force supérieure à une valeur limite nécessaire pour que le bloc moteur 3 reste en position embrayée (pour que le pignon 9 et la couronne dentée restent engrenés). Cette force peut être constante ou au contraire régulée à une valeur adaptée à l'effort nécessaire permettant de transmettre le couple moteur ou freineur.

Il s'agit aussi d'un système auto-dégageant au cas où une des roues ou un des moteurs se bloque, et ceci quel que ce soit le sens de marche de l'avion, dès que l'effort généré par les dentures est supérieur à celui du système de mise en place. Ainsi, le débrayage est forcé par un effet mécanique de l'effort des dentures sur le bloc moteur quand une force limite d'appui est atteinte ; Il peut aussi être commandé suite à une alerte émanant d'un autre élément du système comme par exemple l'atteinte d'un niveau de couple moteur donné.

Enfin, afin de compenser une variation angulaire entre le pignon de sortie 9 du bloc moteur 3 et la couronne dentée 4 de la roue 5 qui serait engendrée par la déformation du train d'atterrissage sous charge, le pignon 9 est porté par l'arbre de sortie 7 du bloc moteur 3 par l'intermédiaire d'un joint homocinétique 29 qui accepte une déformation angulaire tout en transmettant le couple d'entraînement sans variation de vitesse. Ce joint homocinétique peut être, par exemple, un joint tripode coulissant ou un joint à bille plongeant. Cette utilisation d'un joint homocinétique n'est pas habituelle. En effet, l'utilisation classique d'un joint homocinétique est la même que celle d'un joint cardan, c'est à dire qu'il travaille en torsion pure, les efforts radiaux et axiaux étant repris par les paliers supportant les axes. Or, dans l'utilisation présente, le joint homocinétique est utilisé pour transmettre un effort radial (force d'appui du dispositif d'embrayage) et un effort tangentiel (force motrice). Le joint permet alors d'absorber un désalignement angulaire entre le réducteur et la roue.

De plus, l'utilisation des pistes de roulement qui définissent l'entraxe d'engrènement et la position du joint homocinétique complètent le dispositif et permettent de réaliser une transmission par engrenage travaillant sous forte déformation de la roue par rapport au réducteur, par exemple une déformation angulaire de plusieurs degrés (par exemple de l'ordre de +/- 5°).

Dans la présente application à un avion, ce système de motorisation est utilisé par exemple lors des phases avant le décollage, après l'atterrissage, c'est-à-dire pour tout déplacement au sol pour autant que la vitesse soit inférieure à la vitesse de taxiing maximale autorisée. Pendant ces phases, il est alors possible de ne pas utiliser les moteurs principaux de l'avion, ce qui permet de réduire la consommation de carburant, et donc les coûts et les émissions de polluants et de CO₂. Une autre conséquence de l'extinction des moteurs principaux de l'avion est une baisse des nuisances sonores.

Le système ne peut être embrayé que lorsque l'avion est au sol et roule à une vitesse inférieure à la vitesse de taxiing maximale autorisée. Il débrayé dans tous les autres cas.

Le système est conçu afin de motoriser les roues de l'avion, tout en acceptant les déformations du train.

Ainsi, les deux bielles définissant l'axe instantané de rotation pourraient être parallèles.

De même, le vérin pourrait déplacer le bloc moteur dans sa position engrenée, comme dans sa position désengrenée. Le vérin pourrait également être pneumatique ou hydraulique.

Le ressort pourrait être remplacé par un vérin à gaz.

La jambe pourrait porter un nombre différent de roues, selon notamment la taille de l'avion (d'une roue à huit). Il pourrait aussi y avoir plusieurs systèmes par roue (une roue entraînée par plusieurs moteurs). Il serait également possible que certaines roues seulement soit motorisées (voire une seule).

La présente invention peut être appliquée de manière similaire à la motorisation du train d'atterrissage du nez d'un avion.

## Revendications

1. Système de motorisation d'une roue (5) associée à une jambe de suspension pour la circulation au sol d'un aéronef, le système comprenant un bloc moteur (3) et un organe d'entraînement (4) solidaire de la roue (5), le bloc moteur étant solidaire d'une partie suspendue de la jambe de suspension (2), un dispositif d'embrayage (6) reliant un arbre de sortie (7) du bloc moteur (3) à l'organe d'entraînement (4), la transmission entre le bloc moteur et l'organe d'entraînement étant une transmission positive, **caractérisé en ce qu'**un système d'adaptation de vitesse commandé électroniquement est associé au dispositif d'embrayage (6), le bloc moteur (3) comprenant un moteur électrique (10) et un système de réduction (11) reliant l'arbre de sortie du moteur (10) à l'organe d'entraînement (4), le système d'adaptation de vitesse comprenant un capteur permettant de mesurer la vitesse de la roue 5 et des moyens permettant de commander la vitesse de rotation correspondante du moteur (10).

2. Système de motorisation selon la revendication 1, **caractérisé en ce que** le système de réduction (11) est solidaire du moteur (10).

3. Système de motorisation selon l'une des revendications 1 à 2, **caractérisé en ce que** le dispositif d'embrayage (6) est conformé de façon à pouvoir déplacer le bloc moteur (3) dans une position embrayée dans laquelle ce bloc (3) est relié à l'organe d'entraînement (4), et une position débrayée dans laquelle ce bloc (3) en est séparé.

4. Système de motorisation selon la revendication 3, **caractérisé en ce que** le dispositif d'embrayage (6) est conformé de façon a permettre le débrayage automatique du bloc moteur (3) en cas de dépassement d'un niveau donné d'effort transmis entre la roue (5) et au moins un moteur faisant partie du bloc moteur (3).

5. Système de motorisation selon l'une des revendications 3 ou 4, **caractérisé en ce que** le dispositif d'embrayage (6) est conformé de sorte que le bloc moteur (3) est monté en rotation par rapport à la partie suspendue de la jambe de suspension (2), selon un axe horizontal.

6. Système de motorisation selon la revendication 5, **caractérisé en ce que** le dispositif d'embrayage (6) comprend deux bielles (19, 20) définissant l'axe instantané de rotation du bloc moteur (3).

7. Système de motorisation selon l'une des revendications 5 et 6, **caractérisé en ce que** le dispositif d'embrayage (6) comprend un système de déplacement (21) adapté à déplacer le bloc moteur (3) de l'une à l'autre de ses deux positions embrayée et débrayée.

8. Système de motorisation selon la revendication 7, **caractérisé en ce que** le système de déplacement (21) comprend un élément moteur (22).

9. Système de motorisation selon la revendication 8, **caractérisé en ce que** l'élément moteur (22) est formé par un vérin (22) électrique qui comprend un moteur d'entraînement (27) qui est disposé dans le cylindre (23), un écrou (24) qui est monté en translation, et une vis qui permet de transformer le mouvement de rotation du moteur d'entraînement (27) en mouvement de translation de l'écrou (24).

10. Système de motorisation selon l'une des revendications 8 à 9, **caractérisé en ce que** le système de déplacement (21) comprend un ressort de rappel (28) adapté à déplacer le bloc moteur dans le sens opposé de celui imposé par l'élément moteur (22).

11. Système de motorisation selon la revendication 10 dépendante de la revendication 9, **caractérisé en ce que** le vérin (22) est adapté à déplacer le bloc moteur (3) dans sa position engrenée, et le ressort de rappel (28) étant adapté à entraîner le bloc moteur (3) dans sa position désengrenée.

12. Système de motorisation selon l'une des revendications 1 à 11, **caractérisé en ce que** l'organe d'entraînement (4) est une couronne dentée (4) portée par la jante (8) de la roue (5), et adaptée à recevoir en engrènement le pignon de sortie (9) du bloc moteur (3) quand ce dernier est dans sa position embrayée.

13. Ensemble de deux systèmes de motorisation conformes à l'une des revendications 1 à 12, **caractérisé en ce que** cet ensemble est adapté à être associé à une même jambe de suspension (2), **en ce que** les deux roues (5) sont coaxiales, et **en ce que** les deux blocs moteur (3) sont solidaires l'un de l'autre.

## Patentansprüche

1. Motorisierungssystem eines einem Federbein zugeordneten Rads (5) für das Rollen eines Luftfahrzeugs, wobei das System einen Motorblock (3) und ein fest mit dem Rad (5) verbundenes Antriebsorgan (4) enthält, wobei der Motorblock mit einem aufgehängten Teil des Federbeins (2) fest verbunden ist, wobei eine Kupplungsvorrichtung (6) eine Abtriebswelle (7) des Motorblocks (3) mit dem Antriebsorgan (4) verbindet, wobei die Übertragung zwischen dem Motorblock und dem Antriebsorgan eine formschlüssige Kraftübertragung ist, **dadurch gekennzeichnet, dass** ein elektronisch gesteuertes Geschwindigkeitsanpassungssystem der Kupplungsvorrichtung (6) zugeordnet ist, wobei der Motorblock (3) einen Elektromotor (10) und ein Untersetzungssystem (11) enthält, das die Abtriebswelle des Motors (10) mit dem Antriebsorgan (4) verbindet, wobei das Geschwindigkeitsanpassungssystem einen das Messen der Drehzahl des Rads 5 gestattenden Sensor und die Ansteuerung der entsprechenden Drehgeschwindigkeit des Motors (10) gestattende Mittel umfasst.

2. Motorisierungssystem nach Anspruch 1, **dadurch gekennzeichnet, dass** das Untersetzungssystem (11) fest mit dem Motor (10) verbunden ist.

3. Motorisierungssystem nach einem der Ansprüche 1 bis 2, **dadurch gekennzeichnet, dass** die Kupplungsvorrichtung (6) so gestaltet ist, dass sie den Motorblock (3) in eine eingekuppelte Stellung, in der dieser Block (3) mit dem Antriebsorgan (4) verbunden ist, und in eine ausgekuppelte Stellung verschieben kann, in der dieser Block (3) davon getrennt ist.

4. Motorisierungssystem nach Anspruch 3, **dadurch gekennzeichnet, dass** die Kupplungsvorrichtung (6) so gestaltet ist, dass sie das automatische Ausrücken des Motorblocks (3) bei Überschreiten einer zwischen dem Rad (5) und mindestens einem Teil des Motorblocks (3) bildenden Motor übertragenen gegebenen Krafthöhe gestattet.

5. Motorisierungssystem nach einem der Ansprüche 3 oder 4, **dadurch gekennzeichnet, dass** die Kupplungsvorrichtung (6) so gestaltet ist, dass der Motorblock (3) bezüglich des aufgehängten Teils des Federbeins (2) gemäß einer waagrechten Achse drehend montiert ist.

6. Motorisierungssystem nach Anspruch 5, **dadurch gekennzeichnet, dass** die Kupplungsvorrichtung (6) zwei Pleuelstangen (19, 20) enthält, die die momentane Drehachse des Motorblocks (3) definieren.

7. Motorisierungssystem nach einem der Ansprüche 5 und 6, **dadurch gekennzeichnet, dass** die Kupplungsvorrichtung (6) ein Verschiebesystem (21) enthält, das den Motorblock (3) von der einen in die andere seiner zwei eingekuppelten und ausgekuppelten Stellungen verschieben kann.

8. Motorisierungssystem nach Anspruch 7, **dadurch gekennzeichnet, dass** das Verschiebesystem (21) ein Motorelement (22) enthält.

9. Motorisierungssystem nach Anspruch 8, **dadurch gekennzeichnet, dass** das Motorelement (22) von einem Elektrozylinder (22) gebildet wird, der einen im Zylinder (23) angeordneten Antriebsmotor (27), eine translatorisch montierte Mutter (24) und eine Schraube enthält, die es ermöglicht, die Drehbewegung des Antriebsmotors (27) in eine Translationsbewegung der Mutter (24) umzuwandeln.

10. Motorisierungssystem nach einem der Ansprüche 8 bis 9, **dadurch gekennzeichnet, dass** das Verschiebesystem (21) eine Rückstellfeder (28) enthält, die dazu geeignet ist, den Motorblock in die der durch das Motorelement (22) auferlegten Richtung entgegengesetzte Richtung zu verschieben.

11. Motorisierungssystem nach Anspruch 10 in Abhängigkeit von Anspruch 9, **dadurch gekennzeichnet, dass** der Zylinder (22) dazu geeignet ist, den Motorblock (3) in seine eingekuppelte Stellung zu verschieben, und wobei die Rückstellfeder (28) dazu geeignet ist, den Motorblock (3) in seine ausgekuppelte Stellung zu führen.

12. Motorisierungssystem nach einem der Ansprüche 1 bis 11, **dadurch gekennzeichnet, dass** das Antriebsorgan (4) ein von der Felge (8) des Rads (5) getragener Zahnkranz (4) ist, der dazu geeignet ist, das Abtriebsritzel (9) des Motorblocks (3) in Eingriff zu empfangen, wenn Letzterer in seiner eingekuppelten Stellung ist.

13. Einheit aus zwei Motorisierungssystemen nach einem der Ansprüche 1 bis 12, **dadurch gekennzeichnet, dass** diese Einheit geeignet ist, dem gleichen Federbein (2) zugeordnet zu werden, dass die zwei Räder (5) koaxial sind, und dass die zwei Motorblöcke (3) fest miteinander verbunden sind.

## Claims

1. Motorizing system for powering a wheel (5) associated with a suspension strut for moving an aircraft around on the ground, the system comprising a motor unit (3) and a drive member (4) secured to the wheel (5), the motor unit being secured to a sprung part of the suspension strut (2), a clutch device (6) connecting an output shaft (7) of the motor unit (3) to the drive member (4), the transmission between the motor unit and the drive member being a positive transmission, **characterized in that** an electronically controlled speed matching system is associated with the clutch device (6) and **in that** the motor unit (3) comprises an electric motor (10) and a reduction system (11) connecting the output shaft of the motor (10) to the drive member (4), the speed matching system comprising a sensor for measuring the speed of the wheel (5) and means for commanding the corresponding rotational speed of the motor (10).

2. Motorizing system according to Claim 1, **characterized in that** the reduction system (11) is secured to the motor (10).

3. Motorizing system according to one of Claims 1 to 2, **characterized in that** the clutch device (6) is configured in such a way as to be able to move the motor unit (3) into an engaged position in which this unit (3) is connected to the drive member (4), and a disengaged position in which this unit (3) is separated therefrom.

4. Motorizing system according to Claim 3, **characterized in that** the clutch device (6) is configured in such a way as to allow the motor unit (3) to disengage automatically if the load transmitted between the wheel (5) and at least one motor that forms part of the motor unit (3) exceeds a given level.

5. Motorizing system according to either of Claims 3 and 4, **characterized in that** the clutch device (6) is configured in such a way that the motor unit (3) is mounted to rotate with respect to the sprung part of the suspension strut (2), about a horizontal axis.

6. Motorizing system according to Claim 5, **characterized in that** the clutch device (6) comprises two links (19, 20) defining the instantaneous axis of rotation of the motor unit (3).

7. Motorizing system according to either of Claims 5 and 6, **characterized in that** the clutch device (6) comprises a movement system (21) allowing the motor unit (3) to be moved from one of its two, engaged and disengaged, positions into the other.

8. Motorizing system according to Claim 7, **characterized in that** the movement system (21) comprises a driving element (22).

9. Motorizing system according to Claim 8, **characterized in that** the driving element (22) is formed of an electric actuating jack which comprises a drive motor (27) which is arranged in the jack (23), a nut (24) which is mounted for translational movement and a screw that converts the rotational movement of the drive motor (27) into a translational movement of the nut (24).

10. Motorizing system according to one of Claims 7 to 9, **characterized in that** the movement system (21) comprises a return element (28) designed to move the motor unit in the opposite direction to the direction imposed by the driving element (22).

11. Motorizing system according to Claim 10 dependent on Claim 9, **characterized in that** the actuating jack (22) is able to move the motor unit (3) into its in-mesh position, and the return spring (28) is designed to drive the motor unit (3) into its out-of-mesh position.

12. Motorizing system according to one of Claims 1 to 11, **characterized in that** the drive member (4) is an ring gear (4) carried by the rim (8) of the wheel (5) and designed to enter into mesh with the output gear (9) of the motor unit (3) when the latter is in its engaged position.

13. Assembly of two motorizing systems according to any one of Claims 1 to 12, **characterized in that** this assembly is designed to be associated with one and the same suspension strut (2), **in that** the two wheels (5) are coaxial, and **in that** the two motor units (3) are joined together.
